(19) Europäisches Patentamt
European Patent Office
Office européen des brevets

(11) **EP 2 456 188 B1**

(12) **FASCICULE DE BREVET EUROPEEN**

| | |
|---|---|
| (45) Date de publication et mention de la délivrance du brevet: **27.03.2013 Bulletin 2013/13** | (51) Int Cl.: ***H04M 11/02*** *(2006.01)* ***H01H 9/18*** *(2006.01)* ***H01H 13/02*** *(2006.01)* |

(21) Numéro de dépôt: **11189434.1**

(22) Date de dépôt: **16.11.2011**

(54) **Bloc porte-étiquettes pour portier électronique**

Etikettenträger für Türsprechanlage

Label holder for door intercom

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **19.11.2010 FR 1059510**

(43) Date de publication de la demande:
**23.05.2012 Bulletin 2012/21**

(73) Titulaire: **COGELEC**
**85290 Mortagne -sur- Sèvre (FR)**

(72) Inventeur: **Leclerc, M. Roger**
**85290 Mortagne-sur-Sèvre (FR)**

(74) Mandataire: **Colombo, Michel et al**
**Brevinnov**
**324, rue Garibaldi**
**69007 Lyon (FR)**

(56) Documents cités:
**GB-A- 2 301 941**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

## Description

L'invention concerne un bloc porte-étiquettes et un portier électrique équipé de ce bloc.

Un « portier électrique » est un équipement situé à l'entrée d'une résidence, permettant d'appeler un combiné audiophonique d'un résident pour que celui-ci, en réponse, autorise ou interdise l'accès à la résidence.

A cet effet, les portiers électriques connus du déposant comportent une unité de commande du déverrouillage et/ou du verrouillage d'au moins une porte d'accès à la résidence en fonction d'une commande transmise par le combiné du résident appelé.

Ces portiers électriques comportent par ailleurs un bloc porte-étiquettes.

Des blocs porte-étiquettes connus du déposant comportent :

- une étiquette présentant une face avant plane dont la surface est supérieure ou égale à 3 cm$^2$,
- un bouton d'appel présentant une face latérale s'étendant principalement dans une direction perpendiculaire à la face avant de l'étiquette, ce bouton étant déplaçable entre:

  • une position de repos dans laquelle au moins une partie supérieure de la face latérale du bouton fait saillie au-delà de la face avant de l'étiquette, et
  • une position escamotée,

- un dispositif d'éclairage de l'étiquette apte à rayonner un faisceau lumineux directement sur la face avant de l'étiquette, ce dispositif étant suffisamment puissant pour que l'éclairement de la face avant de l'étiquette, produit uniquement par le dispositif soit supérieur à 30 lux.

De l'état de la technique est également connu du GB2301941A.

La face avant de l'étiquette est celle qui est tournée vers le visiteur. Typiquement, cette face avant comprend des inscriptions destinées à être lues par un visiteur telles que le nom d'un résident.

Les portiers électriques, de par leur situation dans un emplacement accessible aux visiteurs, sont souvent victimes d'actes de vandalisme.

Afin de palier à cet inconvénient, des portiers électriques sont équipés d'un bloc porte-étiquettes supportant des étiquettes dites antivandales. Par « étiquettes antivandales » on désigne ici des étiquettes réalisées dans un matériau incassable et ininflammable sur lequel est directement inscrit le nom du résident. Typiquement, ces étiquettes sont réalisées en métal. Un tel bloc porte-étiquettes est par exemple divulgué par le déposant dans la demande de brevet déposée sous le numéro FR090958192.

Toutefois, l'utilisation d'étiquettes antivandales soulève un problème quant à l'éclairage de ces étiquettes. En effet, ces étiquettes n'étant généralement pas translucides, un rétro-éclairage ne peut être mis en oeuvre. Par « rétro-éclairage » on désigne un éclairage d'une étiquette dans lequel une source lumineuse rayonne un faisceau lumineux directement sur une face arrière de l'étiquette. Par « face arrière » on désigne ici la face de l'étiquette opposée à la face avant.

L'utilisation de telles étiquettes antivandales nécessite en conséquence la mise en oeuvre d'un éclairage direct. Par « éclairage direct » on désigne un éclairage d'une étiquette dans lequel une source lumineuse rayonne un faisceau lumineux dont la direction de propagation est dirigée directement vers la face avant de cette étiquette.

Des dispositifs d'éclairage direct connus du déposant comprennent une excroissance formée sur une face avant du bloc porte-étiquettes. Une source lumineuse, typiquement une diode, est logée à l'intérieur de cette excroissance. La source lumineuse est alors dirigée vers l'étiquette de manière à l'éclairer.

Un inconvénient de tels dispositifs d'éclairage est que la fabrication d'un bloc porte-étiquettes comportant une excroissance est complexe. De plus, la présence d'une excroissance supplémentaire rend le bloc plus sensible au vandalisme. Par exemple, la présence de cette excroissance facilite l'arrachage du bloc porte-étiquettes à l'aide d'une pince. L'excroissance forme aussi un élément supplémentaire du bloc porte-étiquettes susceptible d'être victime des actes de vandalisme.

L'invention vise à remédier à ces inconvénients.

L'invention a donc pour objet un bloc porte-étiquettes, dans lequel le bouton comprend une fenêtre ménagée dans la partie supérieure de la face latérale de ce bouton, et le dispositif d'éclairage est situé au moins en partie à l'intérieur du bouton, en vis à vis de la fenêtre, de manière à ce que le faisceau lumineux qui éclaire la face avant de l'étiquette traverse cette fenêtre.

Avec un tel bloc porte-étiquettes, il est possible de réaliser un éclairage direct de l'étiquette sans ajouter une excroissance supplémentaire sur la face avant de ce bloc.

Les modes de réalisation de ce bloc porte-étiquettes peuvent comporter une ou plusieurs des caractéristiques suivantes :

  ■ le bloc comporte une plaque sur laquelle est fixée l'étiquette et dans laquelle est ménagé un orifice à travers lequel le bouton fait saillie dans sa position de repos, la course du bouton entre sa position de repos et sa position escamotée étant telle que la fenêtre est cachée par la platine dans la position escamotée de sorte que le faisceau lumineux ne soit pas dirigé vers la face avant dans cette position,

  ■ le dispositif d'éclairage est apte à rayonner, à travers la fenêtre, un faisceau lumineux qui, en tout point de la face avant de l'étiquette, produit un éclairement local supérieur à 30 lux, et de préférence à 50 lux, lorsque le bouton d'appel est en position de repos,

■ le dispositif d'éclairage comporte une source lumineuse rayonnant un faisceau lumineux et un guide de lumière fixé à l'intérieur du bouton pour diriger ce faisceau rayonné en direction de la face avant, ce guide comportant une face d'entrée tournée vers la source lumineuse et une face de sortie reçue dans la fenêtre du bouton,

■ bloc, dans lequel:

- la face d'entrée est une lentille collimatrice, et
- le guide comprend des faces internes réfléchissantes pour diriger le faisceau de la face d'entrée vers la face de sortie, une des faces internes étant de forme concave pour augmenter la concentration des rayons du faisceau lumineux dans une première portion de la face de sortie par rapport à la concentration de ces rayons dans une seconde portion de la face de sortie,

■ bloc, dans lequel:

- une extrémité inférieure du bouton d'appel repose sur un circuit imprimé, le circuit imprimé comportant une face avant en vis-à-vis de l'extrémité inférieure du bouton d'appel, une face arrière et un orifice traversant de part en part ce circuit imprimé,
- la source est montée sur la face arrière de ce circuit imprimé en vis-à-vis de l'orifice pour rayonner le faisceau en direction de la face d'entrée du guide par l'intermédiaire de l'orifice,

■ la face d'entrée est située à une distance $L$ par rapport à la source lumineuse, cette distance vérifiant la relation suivante: $L \leq Lmax$, $Lmax = (D/2)/\tan(a/2)$ où,

- D est le diamètre de la face d'entrée, et
- $\alpha$ est l'angle d'émission de la source

■ la direction de propagation du faisceau rayonné par la source est perpendiculaire à la face avant de l'étiquette,

■ le bloc comporte un écran comprenant une face réfléchissante tournée vers la face avant de l'étiquette, l'écran étant disposé du côté de l'étiquette opposé au côté où est située le bouton d'appel de manière à ce que la face réfléchissante réfléchisse le faisceau rayonné par le dispositif d'éclairage vers la face avant de cette étiquette,

■ le dispositif d'éclairage comporte une source de lumière fixée sans aucun degré de liberté à l'intérieur du bouton d'appel et en vis-à-vis de la fenêtre de manière à rayonner le faisceau lumineux directement sur la face avant de l'étiquette.

Ces modes de réalisation du portier électrique présente en outre les avantages suivants :

■ en cachant la fenêtre lorsque le bouton est en position escamotée, un visiteur possède un signal visuel lui indiquant que le bouton d'appel est enclenché ou non,

■ avec un éclairement local supérieur à 30 lux en tout point de la face avant de l'étiquette, un visiteur peut lire une inscription quelle que soit la position de cette inscription sur la face avant,

■ un dispositif d'éclairage comportant une source lumineuse et un guide de lumière est simple à réaliser,

■ un guide de lumière conformé comme décrit plus haut permet de réaliser un éclairage plus uniforme de la face avant de l'étiquette,

■ en montant la source lumineuse sur la face arrière du circuit imprimé, la fabrication du bouton d'appel est simplifiée,

■ en disposant la face d'entrée à une distance $L$ par rapport à la source lumineuse vérifiant la relation présentée plus haut le flux lumineux pénétrant dans le guide de lumière est maximisé,

■ en utilisant un écran pour réfléchir le faisceau lumineux vers la face avant, on augmente le flux lumineux transmit à la face avant de l'étiquette et par la même la lisibilité des inscriptions.

L'invention concerne également un portier électrique pour une résidence, ce portier comportant:

- un bloc porte-étiquettes, ce bloc porte-étiquettes comprenant au moins un bouton d'appel pour appeler un combiné audiophonique d'un résident pour que celui-ci, en réponse, autorise ou interdise l'accès à la résidence, le bloc porte-étiquettes étant conforme au bloc porte-étiquettes présenté plus haut, et
- une unité de commande du déverrouillage et/ou du verrouillage d'au moins une porte d'accès à la résidence en fonction d'une commande transmise par le combiné du résident appelé.

L'invention sera mieux comprise à la lecture de la description qui va suivre, donnée uniquement à titre d'exemple non limitatif et faite en se référant aux dessins sur lesquels :

- la figure 1 est une illustration schématique d'un système de contrôle d'accès à une résidence comportant un portier électrique,
- la figure 2 est une illustration schématique et en vue de côté du portier électrique de la figure 1,
- la figure 3 est une illustration schématique et en perspective d'un bloc porte-étiquettes appartenant au portier de la figure 2,
- la figure 4 est une illustration schématique et en coupe d'un bouton d'appel du bloc porte-étiquettes de la figure 3,

- la figure 5 est une illustration schématique et en vue de côté d'un dispositif d'éclairage du bloc de la figure 3,
- la figure 6 est une illustration schématique d'une première variante du bouton de la figure 4, et
- la figure 7 est une illustration schématique d'une seconde variante du bouton de la figure 4.

Dans ces figures, les mêmes références sont utilisées pour désigner les mêmes éléments. L'ensemble des figures présentées est orienté à l'aide d'une même base orthonormée R ($\underline{x}$; $\underline{y}$; $\underline{z}$). Par la suite, les parties supérieure et inférieure d'un élément sont définies par rapport à la direction z.

Dans la suite de cette description, les caractéristiques et fonctions bien connues de l'homme du métier ne sont pas décrites en détails.

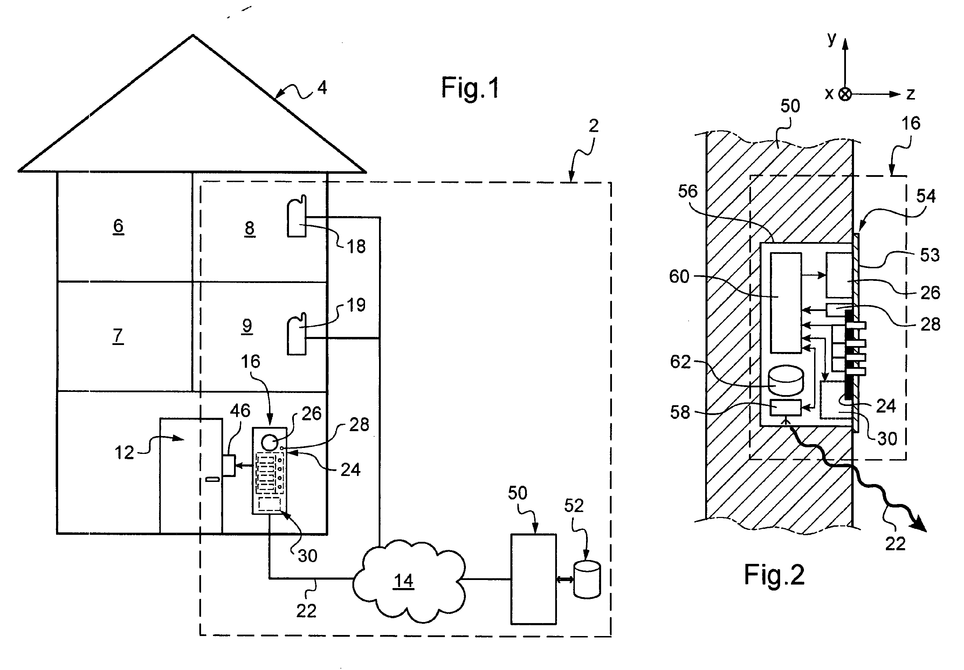

La figure 1 représente un système 2 de contrôle d'accès à une résidence 4. Typiquement, la résidence 4 est un habitat collectif comportant plusieurs appartements. Par exemple, la résidence 4 comporte au moins quatre appartements 6, 7, 8 et 9.

La résidence 4 est équipée d'une porte d'accès 12 à la résidence.

Le système 2 permet d'autoriser, et en alternance, d'interdire l'accès à la résidence 4 à un visiteur.

A cet effet, chaque résident de la résidence 4 est équipé d'un combiné audiophonique raccordé, par l'intermédiaire d'un réseau 14 de transmission d'informations à un portier électrique 16 situé à proximité de la porte 12.

Pour simplifier l'illustration, seuls deux combinés audiophoniques 18, 19 ont été représentés. Ces combinés sont par exemples des téléphones mobiles raccordés au réseau 14 par l'intermédiaire d'une liaison sans fil.

Par exemple, le réseau 14 est un réseau téléphonique public. Il peut s'agir d'un réseau à commutation de paquets ou d'un réseau à commutation de circuits.

Le portier 16 remplit la fonction d'interphone en permettant à un visiteur présent devant ce portier d'établir une conversation audiophonique avec le résident appelé. A cet, effet, le portier 16 est raccordé au réseau 14 par l'intermédiaire d'une liaison 22 de transmission d'informations. De préférence, cette liaison 22 est également une liaison de transmission d'informations sans fil.

Le portier 16 est équipé :

- d'un bloc porte-étiquettes 24,
- d'un haut-parleur 26, et
- d'un microphone 28.

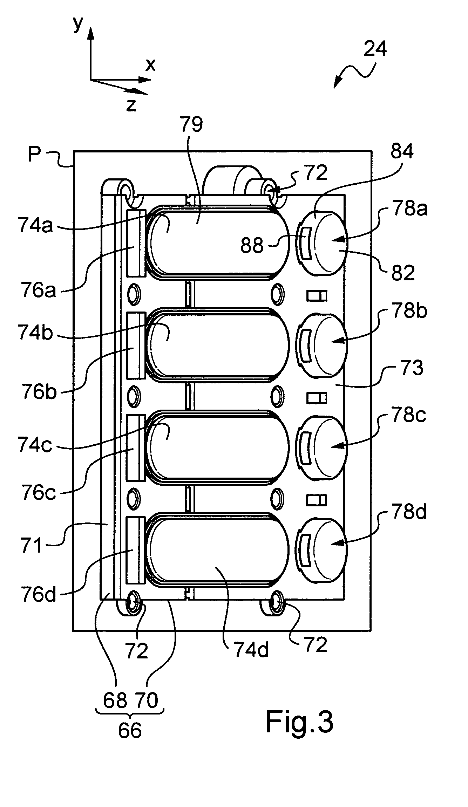

Le bloc porte-étiquettes 24 est décrit en détail plus loin en référence à la figure 3.

Le portier 16 peut également comprendre des équipements optionnels 30 tels que :

- un clavier permettant à un aveugle de composer un code d'appel d'un des combinés d'un résident, ou
- un lecteur de badge permettant d'autoriser et, en alternance d'interdire l'accès à la résidence 4 en fonction d'informations contenues dans un badge présenté devant ce lecteur.

Le système 2 comprend également un mécanisme 46 de verrouillage et, en alternance, de déverrouillage de la porte 12. Ce mécanisme 46 est commandé par le portier 16 en réponse à la réception d'une commande de verrouillage ou de déverrouillage transmise par l'un des combinés 18 et 19.

La figure 2 représente le portier 16 encastré dans un mur 50 de la résidence 4. Seule la face avant 53 de ce portier 16 est directement accessible depuis l'extérieur de la résidence 4. Ici, la face avant 53 est constituée par la face avant d'une platine antivandale 54.

Une telle platine 54 est typiquement réalisée en métal de manière à résister aux différentes tentatives de vandalisme. Par exemple, cette platine est une plaque en inox de plus de 2 à 3 mm d'épaisseur ou une plaque en aluminium de plus de 3 à 4 mm d'épaisseur. Des orifices traversent la platine 54 de part en part pour recevoir des boutons d'appel, des étiquettes et des écrans du bloc 24. Ces boutons d'appel, ces étiquettes et ces écrans sont décrits en référence à la figure 3.

L'ensemble des composants électroniques qui constitue le haut-parleur 26, le microphone 28 et les équipements optionnels 30 sont situés derrière cette platine 54 à l'intérieur d'une niche 56 creusée dans l'épaisseur du mur 50.

Le portier 16 comprend également, logé à l'intérieur de la niche 56 :

- un émetteur-récepteur 58 permettant de raccorder le portier 16 au réseau 14,
- une unité de commande 60 des différents équipements du portier 16, et
- une mémoire 62 raccordée à l'unité 60 de commande.

L'accès à l'intérieur de la niche 56 n'est possible qu'en ouvrant le portier 16. L'ouverture du portier 16 consiste par exemple à déverrouiller, à l'aide d'un outillage spécial la platine 54 pour que l'accès à l'intérieur de la niche 56 soit rendu possible.

La figure 3 représente plus en détail le bloc porte-étiquettes 24.

Le bloc 24 comporte un boîtier 66 fixé sur une face arrière de la platine 54. Le boitier 66 comprend un réceptacle 68 et une plaque 70 formant un couvercle pour ce réceptacle.

La plaque 70 comprend une face arrière 71 et une face avant 73 . Les faces 71 et 73 sont planes. Ici, les faces 71 et 73 sont parallèles à un même plan P passant par les directions $\underline{x}$ et $\underline{y}$.

La plaque 70 comprend des alésages 72 à l'intérieur desquels des vis sont introduites pour fixer la plaque 70 sur la platine 54.

La plaque 70 supporte des étiquettes sur lesquelles sont inscrits les noms des résidents. Afin de simplifier la figure 3, seul quatre étiquettes 74a, 74b, 74c et 74d sont représentées. Les étiquettes 74a, 74b, 74c et 74d sont identiques. Par la suite seul l'étiquette 74a est décrite en détail.

L'étiquette 74a fait saillie au-delà de la face 73 de la plaque 70 de manière à être reçue à l'intérieur du trou prévu à cet effet dans la platine 54.

L'étiquette 74a présente une face avant 79 comprenant des inscriptions telles que le nom d'un résident. Cette face 79 est ici plane et s'étend majoritairement selon un plan parallèle au plan P.

La surface de la face 79 est supérieure ou égale à 3 cm$^2$, de préférence supérieure ou égale à 6cm$^2$ et de manière encore plus préférentielle supérieure ou égale à 8 cm$^2$. Dans cet exemple, la surface de la face 79 est égale à 976mm$^2$.

La face 79 est rectangulaire. Ici, les angles de la face 79 sont arrondis. Ici, la longueur $\underline{D}$ de la face 79 est égale à 61 mm et sa largeur $\underline{d}$ est égale à 16m m.

L'étiquette 74a est avantageusement conformée de manière à ce que, lorsque le boîtier 66 est fixé sur la face arrière de la platine 54, la face avant 79 soit affleurante avec la face 53. Par « affleurant » on désigne ici le fait que la distance séparant deux faces, selon la direction $\underline{z}$ est inférieure à 1mm et, de préférence inférieure à 0,5mm et de manière encore plus préférentielle inférieure à 0,2mm. Dans le cas de l'étiquette, de préférence, sa face avant est très légèrement en retrait de la face 53.

Dans cet exemple, l'étiquette 74a est métallique. Par exemple, elle est identique à celles décrites dans la demande de brevet FR0958192.

La plaque 70 supporte autant de boutons d'appel que d'étiquettes. Ici, la plaque 70 supporte quatre boutons d'appel 78a, 78b, 78c et 78d. Les boutons d'appel 78a-78d sont, respectivement, associés aux étiquettes 74a-74d. Chaque bouton 78a-78d déclenche, lorsqu'il est enfoncé, un appel vers le combiné du résident inscrit sur l'étiquette 74a-74d qui lui est associée.

Les boutons d'appel 78a-78d sont identiques. Par la suite seul le bouton 78a est décrit en détail.

Le bouton d'appel 78a présente une face d'appui 82 et une face latérale 84. Dans cet exemple, la face 82 s'étend parallèlement au plan P. Ici, la face latérale 84 s'étend selon la direction $\underline{z}$.

Le bouton 78a est déplaçable entre:

- une position de repos dans laquelle au moins une partie supérieure de la face latérale 84 fait saillie au-delà de la face 79, et
- une position escamotée.

Sur la figure 3, le bouton d'appel 78a est représenté en position de repos.

Lorsque le bouton 78a est en position de repos, la distance séparant la face 82 de la face 79 de l'étiquette, selon la direction $\underline{z}$, est inférieure ou égale à 1,5 cm, de préférence inférieure ou égale à 1cm, et de manière encore plus préférentielle, inférieure ou égale à 5mm. Ici, cette distance est égale à 5mm ou à 3,6mm.

Lorsque le bouton 78a est en position escamotée, la distance séparant la face 82 de la face 79 selon la direction $\underline{z}$ est typiquement comprise entre 3mm et 1 mm ou 0,5mm. Par exemple, cette distance est ici de 1,6mm.

Le bouton 78a comporte une fenêtre 88 ménagée dans la partie supérieure de la face latérale 84.

La fenêtre 88 est avantageusement conformée de manière à ce que:

- lorsque le bouton 78a est en position de repos, la fenêtre 88 est tournée vers la face 79, et
- lorsque le bouton 78a est en position escamotée, la fenêtre 88 est, de préférence, partiellement ou totalement cachée derrière la face 73.

Ici, lorsque le bouton 78 est en position escamotée, la fenêtre 88 est totalement cachée.

Dans l'exemple, le bouton 78a est un bouton poussoir de forme cylindrique à base circulaire. Toujours dans l'exemple, la fenêtre 88 est de forme rectangulaire. La fenêtre 88 s'étend sur une portion angulaire supérieure à 10°, de préférence supérieure à 30° ou à 45°. Cette portion angulaire est de préférence également inférieure à 90°. Ici, la longueur de la fenêtre 88 est égale à 7mm et sa largeur est égale à 2,3mm.

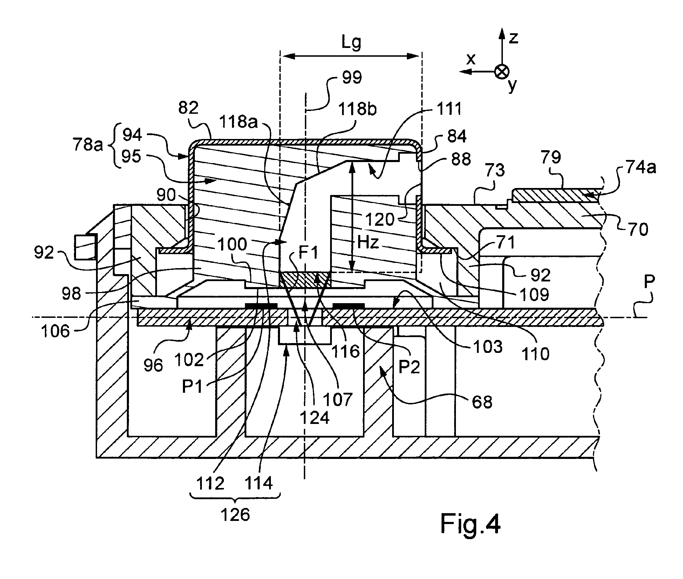

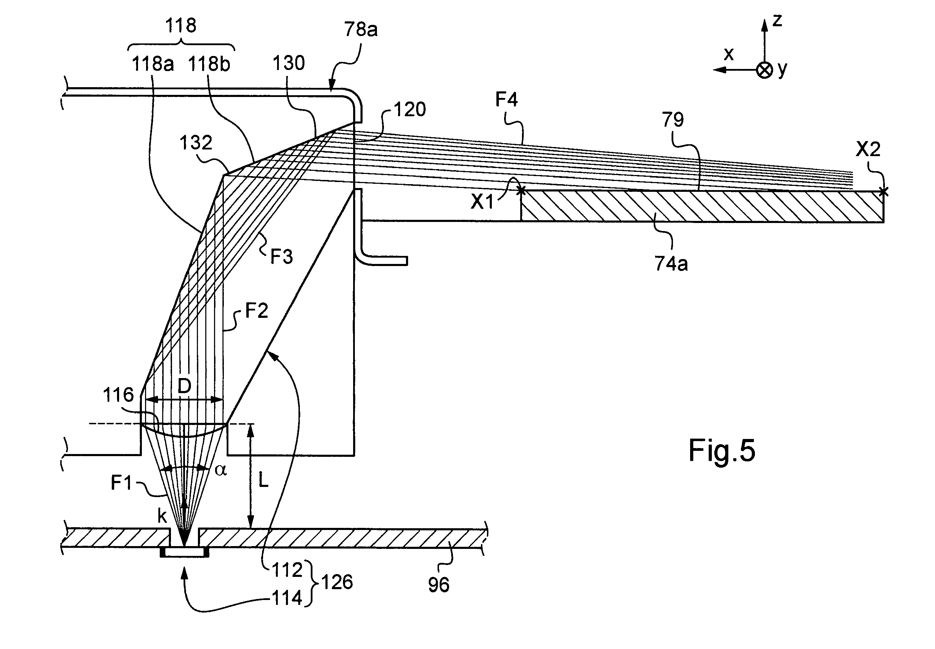

La plaque 70 supporte par ailleurs des écrans 76a, 76b, 76c, et 76d pour réfléchir vers leurs étiquettes respectives 74a-74d des faisceaux lumineux rayonnés par des dispositifs d'éclairage de ces étiquettes. Les dispositifs d'éclairages sont décrit plus loin en référence aux figures 4 et 5.

Les écrans 76a-76d sont identiques. Par la suite seul l'écran 76a associé à l'étiquette 74a est décrit.

L'écran 76a est disposé de manière à ce que l'étiquette 74a soit située entre l'écran 76a et le bouton 78a. De préférence, l'écran 76a comporte une face réfléchissante tournée vers la face 79. La face réfléchissante est avantageusement orientée de manière à maximiser la réflexion du faisceau lumineux en direction de la face 79 et, plus précisément, sur la portion de la face 79 la plus éloignée du bouton 78a. Ici, la réflexion sur l'écran 76a est diffuse et cette face réfléchissante s'étend perpendiculairement au plan P.

Dans ces conditions, lorsque le faisceau rayonné par le dispositif d'éclairage de l'étiquette 74a s'étend au-delà de la face 79, l'écran 76a réfléchit le faisceau vers l'étiquette 74a. Ainsi, le flux lumineux reçu par la face 79 est accru et la lisibilité des inscriptions améliorée.

L'écran 76a est fixé sur la plaque 70 sans aucun degré de liberté. Par exemple, l'écran 76a a une forme prismatique. Ici, l'écran s'étend principalement selon la direction z. L'écran 76a fait saillie au-delà de la face 79 de l'étiquette et au-delà de la face 53 de la platine 54 lorsque le boîtier 66 est fixé sur la face arrière de cette platine.

Le réceptacle 68 protège la face arrière 71 de la plaque 70. A cet effet, le réceptacle 68 est emboîté avec la plaque 70 par l'intermédiaire d'encoches ménagées à travers la plaque 70.

La figure 4 illustre plus en détail le bouton 78a. Le bouton 78a est ici illustré en position de repos.

Le bouton 78a est monté coulissant à l'intérieur d'un logement 90. Le logement 90 traverse de part en part la plaque 70 et se prolonge par des parois 92. Les parois 92 s'étendent depuis la face 71, perpendiculairement à cette face 71. Dans l'exemple, le bouton 78a coulisse parallèlement à la direction z.

Le bouton 78a comporte une coque 94 et un corps 95.

La coque 94 est un cylindre creux à base circulaire à l'intérieur duquel est reçu le corps 95. La coque 94 constitue la partie visible du bouton 78a. Le sommet de la coque 94 constitue ainsi la face 82. La face latérale de la coque 94 constitue la face 84. Une ouverture est ménagée sur la face latérale de la coque 94 pour former la fenêtre 88.

L'extrémité inférieure de la coque 94 est reçue à l'intérieur du logement 90. Cette extrémité forme un rabat 109 s'étendant perpendiculairement à la direction z. Le rabat 109 repose en butée contre la face arrière 71 de la plaque 70. Dans ces conditions, un éventuel arrachage du bouton 78a en tirant sur la coque 94 est rendu difficile.

Dans l'exemple, la coque 94 est en acier inoxydable.

Afin de permettre le coulissement de la coque 94 à l'intérieur du logement 90, un évidement 110 est ménagé à l'aplomb du rabat 109. La largeur de cet évidement 110 est très légèrement supérieure à la largeur du rabat 109 pour autoriser le coulissement.

Le corps 95 est reçu dans le logement 90 et repose, au fond de ce logement 90, sur un circuit imprimé 96. Le corps 95 sert de moyen de rappel du bouton 78a vers sa position de repos.

A cet effet, le corps 95 est ici réalisé dans un matériau élastomère tel que du silicone. Le corps 95 comprend:

    ● un tronc 98 cylindrique à base circulaire logé à l'intérieur de la coque 94 et fixé sans aucun degré de liberté avec cette coque 94,
    ● un butoir 100 faisant saillie à l'extrémité inférieure du tronc 98, et
    ● une collerette 106 entourant le butoir 100.

Ici, ce tronc 98 s'étend selon une direction 99 parallèle à la direction z.

Le butoir 100 est un cylindre de diamètre inférieur au diamètre du tronc 98 centré sur la direction 99.

Le butoir 100 comporte une face 102 en vis-à-vis de deux pistes P1 et P2 du circuit imprimé 96. Un espace vide 107 sépare la face 102 des pistes P1 et P2 dans la position de repos. Ainsi, ces pistes P1 et P2 sont électriquement isolées l'une de l'autre dans la position de repos. La face 102 est recouverte d'un matériau électriquement conducteur. Dans cet exemple, une couche de carbone est déposée sur la face 102. Dans la position escamotée, la face 102 vient en appui simultanément contre les pistes P1 et P2. Ainsi, la face 102 forme un pont connectant électriquement les pistes P1 et P2. L'apparition de ce pont indique à l'unité de commande que le bouton 78a est en position escamotée. Ici, cela déclenche l'appel d'un résident.

La collerette 106 s'étend depuis la partie inférieure du tronc 98 en s'évasant. L'extrémité de la collerette 106 forme une rondelle. Ici, cette rondelle est pincée, en permanence, entre des extrémités des parois 92 et le circuit imprimé 96 pour former un joint d'étanchéité autour du circuit imprimé 96.

La collerette 106, la face 102 et la face 103 du circuit 96 délimite l'espace vide 107.

Le corps 95 comprend par ailleurs un logement 111 pour recevoir un guide de lumière 112. Ici, le logement 111 est un évidement creusé à l'intérieur du tronc 98. Le logement 111 débouche sur la fenêtre 88 d'une part et sur la face 102 d'autre part.

Le guide de lumière 112 est conformé pour diriger un faisceau lumineux F1 rayonné par une source 114 en direction de la face 79.

A cet effet, le guide 112 comporte:

    ● une face d'entrée 116 tournée vers la source 114,
    ● des faces internes 118a et 118b pour réfléchir le faisceau rayonné par la source 114, et
    ● une face de sortie 120 reçue dans la fenêtre 88 et tournée vers la face 79 à éclairer.

Ici, la face 120 est affleurante avec la face 84.

La face 116 est ici disposée en retrait par rapport à la face 102 pour qu'elle ne vienne pas en appui contre le circuit 96 dans la position escamotée.

Dans cet exemple, le guide 112 est en matière plastique transparente à la lumière.

Toujours dans cet exemple, le guide 112 s'étend selon la direction z sur une hauteur Hg inférieure à 25 mm, de préférence inférieure à 20mm et de manière encore plus préférentielle inférieure à 15mm. Ici, la hauteur Hg est égale à 12,95 mm.

Toujours dans l'exemple, le guide 112 s'étend selon la direction x sur une largeur Lg inférieure à 20mm, de préférence inférieure à 15 mm et de manière encore plus préférentielle inférieure à 10mm. Ici, la largeur Lg est égale à 8,47mm.

Le guide 112 est décrit plus en détail en référence à la figure 5.

La source 114 rayonne un faisceau lumineux F1 dans une direction de propagation k confondue avec l'axe 99 et d'angle d'émission α.

Dans cette description on désigne par « direction de propagation » d'un faisceau un axe de symétrie pour ce faisceau.

Dans cette description, on désigne par « angle d'émission » d'un faisceau la portion angulaire du faisceau concentrant 90% du flux lumineux de ce faisceau.

La source 114 est typiquement une diode électroluminescente (DEL). Ici, la source 114 est une diode traversante montée sur une face arrière du circuit imprimé 96. La source 114 est ici recourbée sur elle-même et rayonne à travers un orifice 124 traversant de part en part le circuit imprimé 96. L'orifice 124 est disposé en vis-à-vis de la face 116.

La source 114 est décrite plus loin en référence à la figure 5.

Par la suite, on désigne par dispositif d'éclairage 126 l'ensemble formé par le guide de lumière 112 et par la source 114.

Le dispositif d'éclairage 126 va maintenant être décrit plus en détail en référence à la figure 5. Afin de simplifier cette figure, seul le bouton 78a, le dispositif d'éclairage 126, et l'étiquette 74a sont illustrés. Ici, le bouton 78a est en position de repos.

Dans la suite de cette description, on désigne par « éclairement d'une face » le flux lumineux total, exprimé en lumen, reçu par la face rapporté à la surface de cette face.

Par « éclairement local d'une face en un point », on désigne le flux lumineux reçu par une portion de la face centrée autour du point, ce flux étant rapporté à la surface de cette portion. Par exemple, la portion est un rectangle de 1mm$^2$. Typiquement, l'éclairement et l'éclairement local sont exprimés en lumen/m$^2$ ou encore en lux.

Le dispositif 126 est conformé de manière à ce que, lorsque le bouton 78a est en position de repos, et lorsque la face 79 n'est éclairée que par l'intermédiaire du dispositif 126, l'éclairement de la face 79 est supérieur à 30 lux, de préférence supérieur à 50 lux, et de manière encore plus préférentielle supérieur à 90lux.

De plus, le dispositif 126 est ici conformé de manière à ce que l'éclairement de la face 79 soit uniforme. Par « éclairement uniforme » on désigne le fait que la différence entre l'éclairement local minimum et l'éclairement local maximum mesurés en deux points X1 et X2 de la face 79 est inférieure à 100 lux, de préférence inférieure à 50 lux et de manière encore plus préférentielle inférieure à 30 lux.

Dans ces conditions, un visiteur peut lire les inscriptions sur la face 79 quelles que soient les conditions de luminosité de l'environnement dans lequel est disposé le portier 16.

La source 114 est séparée de la face 116 d'une distance L. La distance L est avantageusement déterminée de manière à vérifier la relation suivante:

$$L \leq Lmax,$$

et

où,

$$Lmax = \frac{D/2}{\tan(a/2)}$$

● *D* est le diamètre de la face d'entrée 116, et
● *α* est l'angle d'émission de la source 114.

Dans ces conditions, le faisceau F1 est moins large (ou de même largeur) que le diamètre D lorsqu'il intersecte la face 116. Ainsi, l'ensemble des rayons formant le faisceau F1 traverse la face 116. Par conséquent, le flux lumineux fourni au guide 112 est maximisé.

Par ailleurs, de manière à ce que le faisceau entrant dans le guide 112 soit le plus large possible, la distance L est choisie égale à *Lmax*.

Dans l'exemple, la source 114 est choisie de manière à ce que le flux lumineux du faisceau F1 soit constant sur son angle d'émission α. Par « flux lumineux constant sur l'angle d'émission α » on désigne le fait que le flux lumineux en tout point du faisceau F1 distant d'une même distance de la source 114 est égal à une valeur nominale à plus ou moins X% près, où X est égal à 1, 5, 10, 15, 20, 30 ou 40.

Ici, l'angle d'émission α de la source 114 est compris entre 20° et 60°. Par exemple, l'angle d'émission α est égal à 50°

De préférence, la source 114 est choisie de manière à ce que son rendement soit supérieur à 3lmNV, de préférence supérieur à 6lm/W et de manière encore plus préférentielle supérieur à 20lm/W, 30lm/W ou 50lm/W. Par « rendement » on désigne le rapport entre le flux lumineux total émis par la source 114 (exprimée en lumen) et la puissance électrique consommée par la source (exprimée en Watt). Dans ces conditions, la consommation électrique de la source 114 est diminuée.

Dans l'exemple, la puissance de la source 114 est comprise entre 250mW et 350mW. Toujours dans l'exemple, le flux lumineux du faisceau F1 est compris entre 10 et 15 lumen.

La couleur du faisceau F1 (i.e la longueur d'onde du faisceau lumineux F1) est avantageusement choisi en fonction de l'état de surface de la face 79 et/ou de la façon avec laquelle sont inscrites les inscriptions sur cette face 79 (gravées, imprimées, etc).

La face 116 est une lentille collimatrice circulaire qui transforme le faisceau F1 en un faisceau collimaté F2.

La face 118a est inclinée par rapport à la face 116. La face 118a intersecte le faisceau collimaté F2 et réfléchit ce faisceau F2 en direction de la face 118b. On note F3 le faisceau réfléchit par la face 118a.

La face 118a est conformée de manière à faire converger le faisceau F3 vers une extrémité supérieure 130 de la face 118b. Dans ces conditions, les rayons formant le faisceau F3 sont davantage concentrés au niveau de l'extrémité 130 qu'au niveau d'une extrémité inférieure 132 de la face 118b.

A cet effet, la face 118a est ici de forme concave.

La face 118b est inclinée par rapport à la face 118a. La face 118b intersecte le faisceau F3 et réfléchit ce faisceau F3 en direction de la face 120 pour éclairer la face 79. On note F4 le faisceau réfléchit par la face 118b.

La face 118b est conformée de manière à ce que le faisceau F4 éclaire la face 79 sur toute sa longueur et sur toute sa largeur.

De plus, la face 118b est conformée de manière à ce que l'éclairement de la face 79 soit le plus uniforme possible. Par exemple, la face 118b est de forme convexe.

Les rayons du faisceau F4 ne parcourent pas le même chemin optique suivant qu'ils intersectent la face 79 au point X1 ou au point X2. Plus le chemin optique d'un rayon est long, plus le flux lumineux reçu par la face 79 au point d'intersection de ce rayon avec la face 79 est faible. En conséquence, en concentrant les rayons du faisceau sur l'extrémité 130, on améliore l'uniformité de l'éclairage de la face 79.

Les rayons de courbure des faces 118a et 118b permettant d'obtenir un éclairement plus uniforme sur l'intégralité de la face 79 sont déterminés expérimentalement par l'intermédiaire de logiciels de simulation photométrique. A titre d'exemple, le déposant a utilisé le logiciel Tracepro 4.1.7 ®.

De préférence, le dispositif d'éclairage 126 est conformé de manière à ce que lorsque le bouton 78a est en position de repos, et lorsque la face 79 n'est éclairée que par l'intermédiaire du dispositif d'éclairage, le faisceau F4 rayonné est tel qu'en tout point de la face 79 l'éclairement local est supérieur à 30 lux, de préférence supérieur à 50 lux, et de manière encore plus préférentielle supérieur à 70lux. Dans ces conditions, un visiteur peut lire une inscription quelle que soit la position de cette inscription sur la face 79.

On désigne ici par « rendement » du guide 112 le rapport entre le flux lumineux traversant la face 120 et le flux lumineux traversant la face 116. Dans l'exemple, le rendement du guide 112 est supérieur à 10% ou 30%. Ce rendement peut être amélioré en jouant sur la forme du guide 112, sur la longueur du guide 112 ou encore sur le matériau du guide 112.

L'utilisation du bouton 78a va maintenant être décrite.

Initialement, le bouton 78a est en position de repos. La source 114 est alimentée par une source de courant et émet le faisceau F1. En réponse, le guide 112 émet un faisceau F4 en direction de la face 79. La face 79 est éclairée.

Lorsqu'un visiteur presse le bouton 78a, le bouton 78a coulisse alors dans le logement 90 jusqu'à ce que le butoir 100 vienne en appui contre la face 103. Le bouton 78a est en position escamotée.

Dans ces conditions, la fenêtre 88 est cachée par la paroi 92. En conséquence, la face 79 n'est plus éclairée. Ainsi, un signal visuel indique au visiteur que son appel a bien été pris en compte.

De plus, en position escamotée le corps 95 est comprimé contre la face 102. La face 102 forme un pont entre les pistes P1 et P2 indiquant à l'unité de commande 60 que le bouton 78a est en position escamotée.

Lorsque le visiteur relâche la pression sur le bouton 78a, le corps 95 flexible ramène le bouton 78a dans sa position de repos. Le faisceau F4 est à nouveau dirigé vers la face 79. Celle-ci est à nouveau éclairée.

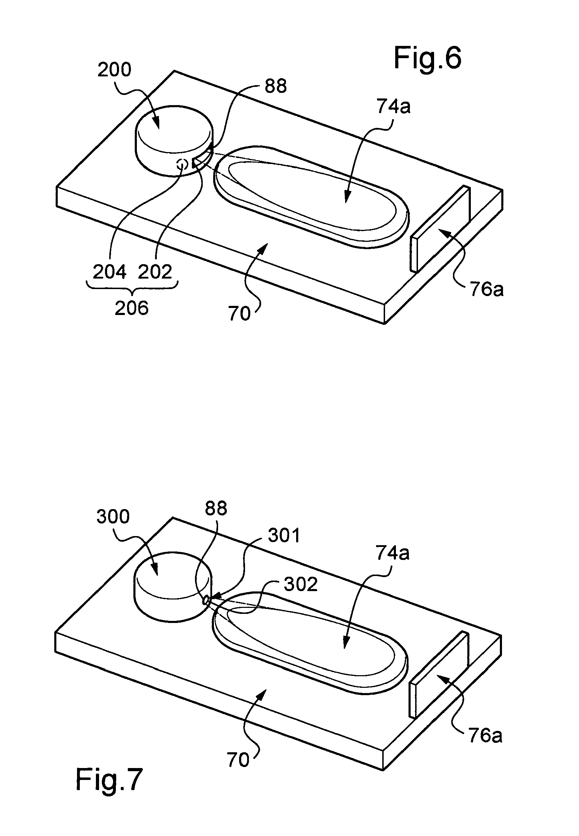

La figure 6 illustre une première variante du bouton 78a. La figure 6 illustre un bouton d'appel 200 identique au bouton 78a à l'exception du fait que le dispositif d'éclairage 126 est remplacé par un dispositif d'éclairage 206. Le dispositif 206 comporte une lentille collimatrice 202 encastrée dans la fenêtre 88. Le bouton200 comporte également une source 204 disposée à l'intérieur du corps 95 directement en vis-à-vis de la lentille 202. La source 206 et la lentille 202 sont disposées de manière à ce que la direction de propagation du faisceau rayonné par le dispositif 206 soit directement dirigée vers la face 79 lorsque le bouton 200 est en position de repos. Dans ce mode de réalisation, la source 204 est fixée sans aucun degré de liberté au bouton 200.

La figure 7 illustre une seconde variante du bouton 78a. La figure 7 illustre un bouton d'appel 300 identique au bouton 78a à l'exception du fait que le dispositif d'éclairage 126 est remplacé par un dispositif 301. Le dispositif 301 comporte uniquement une source 302. Cette source 302 est fixée sans aucun degré de liberté à l'intérieur du bouton 300 en vis-à-vis de la fenêtre 88. La source 302 est disposée de manière à ce que la direction de propagation du faisceau rayonné soit directement dirigé vers la face 79.

De nombreux autres modes de réalisation sont possibles.

Par exemple, le nombre d'étiquettes n'est pas limité à quatre. De même, le nombre de boutons d'appel n'est pas limité à quatre. En variante, le bloc 24 peut comporter uniquement une étiquette et un bouton d'appel.

Les écrans 76a-76d peuvent être omis.

La source 114 n'est pas nécessairement fixée sur la face arrière du circuit 96. Par exemple, la source 114 peut être fixée sur la face 103. Dans ce cas, la source 114 est reçue dans la partie inférieure du logement 111 lorsque le bouton 78a est en position escamotée. De plus, la source 114 n'est pas nécessairement une diode traversante. Il peut en effet s'agir d'une diode montée en surface. Par exemple, la source 114 est une diode de marque TopLed ® de la série « Black série ». La source 114 est par exemple une source rouge de référence LRT66F ® ou une source jaune de référence LYT66F®. A titre d'exemple, la puissance de la source 114 est égale à 300mW. Son rendement est de 50lm/W.

Par ailleurs, la source 114 n'est pas nécessairement fixée au circuit 96. Par exemple, la source 114 peut être disposée à l'intérieur du logement 111 en vis-à-vis de la face 116.

Dans la position escamotée, la fenêtre 88 n'est pas nécessairement cachée par la face 53 de la platine 54.

Dans le bouton 78a le guide de lumière n'est pas nécessairement en matière plastique. Par exemple, le guide de lumière peut être un jeu de miroirs.

La direction selon laquelle coulisse le bouton 78a n'est pas nécessairement perpendiculaire à la face 79. Par exemple, la direction de coulissement du bouton 78a est parallèle au plan P.

Dans une variante du bouton 200, la lentille 202 n'est pas encastrée dans la fenêtre 88. Celle-ci est fixée sur la plaque 70 par l'intermédiaire d'un support prévu à cet effet. Dans ce cas, la source 204 est encastrée dans la fenêtre 88. Ainsi, la source 204 se déplace avec le bouton 200 tandis que la lentille 202 est immobile par rapport à la plaque 70.

**Revendications**

**1.** Bloc porte-étiquettes pour un portier électrique d'une résidence, ce bloc comportant:

- une étiquette (74a) présentant une face avant plane (79) dont la surface est supérieure ou égale à 3 cm$^2$,
- un bouton d'appel (78a) présentant une face latérale (84) s'étendant principalement dans une direction perpendiculaire à la face avant (79) de l'étiquette (74a), ce bouton étant déplaçable entre:

• une position de repos dans laquelle au moins une partie supérieure de la face latérale (84) du bouton (78) fait saillie au-delà de la face avant (79) de l'étiquette (71 a), et
• une position escamotée,

- un dispositif d'éclairage (126) de l'étiquette (74a) apte à rayonner un faisceau lumineux directement sur la face avant (79) de l'étiquette (74a), ce dispositif (126) étant suffisamment puissant pour que l'éclairement de la face avant (79) de l'étiquette, produit uniquement par le dispositif (126), soit supérieur à 30 lux,

**caractérisé en ce que** le bouton (78a) comprend une fenêtre (88) ménagée dans la partie supérieure de la face latérale (84) de ce bouton (78a) et le dispositif d'éclairage (126) est situé au moins en partie à l'intérieur du bouton, en vis à vis de la fenêtre (88), de manière à ce que le faisceau lumineux qui éclaire la face avant (79) de l'étiquette (74a) traverse cette fenêtre (88).

**2.** Bloc selon la revendication 1, dans lequel le bloc (24) comporte une plaque (70) sur laquelle est fixée l'étiquette (74a) et dans laquelle est ménagé un orifice à travers lequel le bouton (78a) fait saillie dans sa position de repos, la course du bouton entre sa position de repos et sa position escamotée étant telle que la fenêtre (88) est cachée par la platine (54) dans la position escamotée de sorte que le faisceau - lumineux ne soit pas dirigé vers la face avant (79) dans cette position.

**3.** Bloc selon l'une quelconque des revendications précédentes, dans lequel le dispositif d'éclairage (126) est apte à rayonner, à travers la fenêtre (88), un faisceau lumineux qui, en tout point de la face avant (79) de l'étiquette (74a), produit un éclairement local supérieur à 30 lux, et de préférence à 50 lux, lorsque le bouton d'appel (78a) est en position de repos.

**4.** Bloc selon l'une quelconque des revendications précédentes, dans lequel le dispositif d'éclairage (126) comporte une source lumineuse (114) rayonnant un faisceau lumineux et un guide de lumière (112) fixé à l'intérieur du bouton pour diriger ce faisceau rayonné en direction de la face avant (79), ce guide (112) comportant une face d'entrée (116) tournée vers la source lumineuse (114) et une face de sortie (120) reçue dans la fenêtre (88) du bouton (74a).

**5.** Bloc selon la revendication 4, dans lequel:

- la face d'entrée (116) est une lentille collimatrice, et
- le guide (112) comprend des faces internes réfléchissantes (118a,118b) pour diriger le faisceau de la face d'entrée (116) vers la face de sortie (120), une des faces internes (118a, 118b) étant de forme concave pour augmenter la concentration des rayons du faisceau lumineux dans une première portion de la face de sortie (120) par rapport à la concentration de ces rayons dans une seconde portion de la face de sortie (120).

**6.** Bloc selon l'une quelconque des revendications 4 à 5, dans lequel:

- une extrémité inférieure du bouton d'appel (78a) repose sur un circuit imprimé (96), le circuit imprimé (96) comportant une face avant en vis-à-vis de l'extrémité inférieure du bouton d'appel (78a), une face arrière et un orifice (124) traversant de part en part ce circuit imprimé (96),
- la source (114) est montée sur la face arrière de ce circuit imprimé (96) en vis-à-vis de l'orifice (124) pour rayonner le faisceau en direction de la face d'entrée (116) du guide (112) par l'intermédiaire de l'orifice (124).

**7.** Bloc selon l'une quelconque des revendications 4 à 6, dans lequel la face d'entrée (116) est située à une distance L par rapport à la source lumineuse (114), cette distance vérifiant la relation suivante: L ≤ Lmax, Lmax = (D/2)/tan(a/2), où,

• D est le diamètre de la face d'entrée (116), et
• α est l'angle d'émission de la source (114).

**8.** Bloc selon l'une quelconque des revendications précédentes, dans lequel la direction de propagation du faisceau rayonné par la source (114) est perpendiculaire à la face avant (79) de l'étiquette.

**9.** Bloc selon l'une quelconque des revendications précédentes, dans lequel le bloc comporte un écran (76a) comprenant une face réfléchissante tournée vers la face avant (79) de l'étiquette, l'écran (76a) étant disposé du côté de l'étiquette (74a) opposé au côté où est située le bouton d'appel (78a)de manière à ce que la face réfléchissante réfléchisse le faisceau rayonné par le dispositif d'éclairage (126) vers la face avant (79) de cette étiquette (74a).

**10.** Bloc selon l'une quelconque des revendications 1 à 3, dans lequel le dispositif d'éclairage comporte une source (204; 302) de lumière fixée sans aucun degré de liberté à l'intérieur du bouton d'appel (78a) et en vis-à-vis de la fenêtre de manière à rayonner le faisceau lumineux directement sur la face avant (79) de l'étiquette (74a).

**11.** Portier électrique pour une résidence, ce portier comportant:

- un bloc porte-étiquettes (24), ce bloc porte-étiquettes (24) comprenant au moins un bouton d'appel (78a) pour appeler un combiné audiophonique d'un résident pour que celui-ci, en réponse, autorise ou interdise l'accès à la résidence, et
- une unité de commande (60) du déverrouillage et/ou du verrouillage d'au moins une porte d'accès à la résidence en fonction d'une commande transmise par le combiné du résident appelé,

**caractérisé en ce que** le bloc porte-étiquettes (24) est conforme à l'une quelconque des revendications précédentes.

**Claims**

**1.** Label-holder block for a door intercom of a residence, this block comprising:

- a label (74a) having a planar front face (79), the surface area of which is greater than or equal to 3 cm$^2$,
- a call button (78a) having a lateral face (84) extending mainly in a direction at right angles to the front face (79) of the label (74a), this button being able to be moved between:

• a rest position in which at least a top part of the lateral face (84) of the button (78) protrudes beyond the front face (79) of the label (71a), and
• a retracted position,

- a lighting device (126) for the label (74a) capable of radiating a light beam directly onto the front face (79) of the label (74a), this device (126) being sufficiently powerful for the lighting of the front face (79) of the label, produced only by the device (126), to be greater than 30 lux,

**characterized in that** the button (78a) comprises a window (88) formed in the top part of the lateral face (84) of this button (78a) and the lighting device (126) is situated at least partly inside the button facing the window (88), so that the light beam which lights the front face (79) of the label (74a) passes through this window (88).

**2.** Block according to Claim 1, in which the block (24) comprises a plate (70) on which the label (74a) is fixed and in which is formed an orifice through which the button (78a) protrudes in its rest position, the travel of the button between its rest position and its retracted position being such that the window (88) is hidden by the plate (54) in the retracted position so that the light beam is not directed towards the front face (79) in this position.

**3.** Block according to any one of the preceding claims, in which the lighting device (126) is capable of radiating, through the window (88), a light beam which, at any point of the front face (79) of the label (74a), produces a local lighting greater than 30 lux, and preferably than 50 lux, when the call button (78a) is in the rest position.

**4.** Block according to any one of the preceding claims, in which the lighting device (126) comprises a light source (114) radiating a light beam and a light guide (112) fixed inside the button to direct this radiated beam towards the front face (79), this guide (112) comprising an input face (116) facing towards the light source (114) and an output face (120) received in the window (88) of the button (74a).

5. Block according to Claim 4, in which:

- the input face (116) is a collimating lens, and
- the guide (112) comprises reflective internal faces (118a, 118b) to direct the beam from the input face (116) to the output face (120), one of the internal faces (118a, 118b) being of concave form to increase the concentration of the rays of the light beam in a first portion of the output face (120) in relation to the concentration of these rays in a second portion of the output face (120).

6. Block according to any one of Claims 4 to 5, in which:

- a bottom end of the call button (78a) rests on a printed circuit (96), the printed circuit (96) comprising a front face facing the bottom end of the call button (78a), a rear face and an orifice (124) passing through this printed circuit (96) from side to side,
- the source (114) is mounted on the rear face of this printed circuit (96) facing the orifice (124) to radiate the beam towards the input face (116) of the guide (112) via the orifice (124).

7. Block according to any one of Claims 4 to 6, in which the input face (116) is situated at a distance L relative to the light source (114), this distance satisfying the following relationship: $L \leq Lmax$, $Lmax = (D/2)/\tan(a/2)$, in which,

• D is the diameter of the input face (116), and
• a is the angle of emission of the source (114).

8. Block according to any one of the preceding claims, in which the direction of propagation of the beam radiated by the source (114) is at right angles to the front face (79) of the label.

9. Block according to any one of the preceding claims, in which the block comprises a screen (76a) comprising a reflective face facing towards the front face (79) of the label, the screen (76a) being arranged to the side of the label (74a) opposite the side where the call button (78a) is situated so that the reflective face reflects the beam radiated by the lighting device (126) towards the front face (79) of this label (74a).

10. Block according to any one of Claims 1 to 3, in which the lighting device comprises a light source (204; 302) fixed with no degree of freedom inside the call button (78a) and facing the window so as to radiate the light beam directly onto the front face (79) of the label (74a).

11. Door intercom for a residence, this intercom comprising:

- a label-holder block (24), this label-holder block (24) comprising at least one call button (78a) for calling an audiophonic handset of a resident for the latter, in response, to allow or prohibit access to the residence, and
- a control unit (60) for controlling the unlocking and/or the locking of at least one access door to the residence according to a command transmitted by the handset of the called resident,

**characterized in that** the label-holder block (24) conforms to any one of the preceding claims.

### Patentansprüche

1. Etikettenträger für eine Türsprechanlage einer Wohnung, wobei dieser Träger Folgendes umfasst:

- ein Etikett (74a), das eine flache Vorderseite (79) aufweist, deren Oberfläche größer oder gleich 3 cm² ist,
- einen Rufknopf (78a), der eine Seitenfläche (84) aufweist, die sich hauptsächlich in eine Richtung senkrecht auf die Vorderseite (79) des Etiketts (74a) erstreckt, wobei dieser Rufknopf verschiebbar ist zwischen:

• einer Ruhestellung, in der mindestens ein oberer Teil der Seitenfläche (84) des Knopfes (78) über die Vorderseite (79) des Etiketts (71a) hinausragt, und
• einer eingezogenen Stellung,

- eine Vorrichtung (126) zur Beleuchtung des Etiketts (74a), die geeignet ist, einen Lichtstrahl direkt auf die Vorderseite (79) des Etiketts (74a) zu richten, wobei diese Vorrichtung (126) leistungsstark genug ist, dass die Beleuchtung der Vorderseite (79) des Etiketts, die nur von der Vorrichtung (126) erzeugt wird, stärker als 30 lux ist,

**dadurch gekennzeichnet, dass** der Knopf (78a) ein Fenster (88) umfasst, das im oberen Teil der Seitenfläche (84) dieses Knopfes (78a) vorgesehen ist, und dass die Beleuchtungsvorrichtung (126) zumindest teilweise im Inneren des Knopfes gegenüber dem Fenster (88) angeordnet ist, so dass der Lichtstrahl, der die Vorderseite (79) des Etiketts (74a) erleuchtet, durch dieses Fenster (88) hindurchgeht.

2. Träger nach Anspruch 1, bei dem der Träger (24) eine Platte (70) umfasst, auf der das Etikett (74a) befestigt ist, und in der eine Öffnung vorgesehen ist, durch die der Knopf (78a) in seiner Ruhestellung hinausragt, wobei der Weg des Knopfes zwischen seiner Ruhestellung und seiner eingezogenen Stellung derart ist, dass das Fenster (88) von der Platte (54) in der eingezogenen Stellung verdeckt ist, so dass der Lichtstrahl in dieser Stellung nicht zur Vorderseite (79) gelenkt wird.

3. Träger nach einem der vorhergehenden Ansprüche, bei dem die Beleuchtungsvorrichtung (126) geeignet ist, durch das Fenster (88) einen Lichtstrahl, der an jedem Punkt der Vorderseite (79) des Etiketts (74a) eine lokale Beleuchtung von über 30 lux und vorzugsweise über 50 lux erzeugt, zu entsenden, wenn sich der Rufknopf (78a) in Ruhestellung befindet.

4. Träger nach einem der vorhergehenden Ansprüche, bei dem die Beleuchtungsvorrichtung (126) eine Lichtquelle (114), die einen Lichtstrahl entsendet, und eine Lichtführung (112), die im Inneren des Knopfes angeordnet ist, um diesen entsandten Strahl in Richtung der Vorderseite (79) zu lenken, umfasst, wobei diese Führung (112) eine Eintrittsfläche (116), die zur Lichtquelle (114) gewandt ist, und eine Austrittsfläche (120), die in dem Fenster (88) des Knopfes (74a) aufgenommen ist, umfasst.

5. Träger nach Anspruch 4, bei dem:

- die Eintrittsfläche (116) eine Kollimationslinse ist, und
- die Führung (112) reflektierende Innenseiten (118a, 118b) aufweist, um den Strahl von der Eintrittsfläche (116) zur Austrittsfläche (120) zu lenken, wobei eine der Innenseiten (118a, 118b) eine konkave Form hat, um die Konzentration der Strahlen des Lichtbündels in einem ersten Abschnitt der Austrittsfläche (120) in Bezug zur Konzentration dieser Strahlen in einem zweiten Abschnitt der Austrittsfläche (120) zu erhöhen.

6. Träger nach einem der Ansprüche 4 bis 5, bei dem:

- ein unteres Ende des Rufknopfes (78a) auf einer gedruckten Schaltung (96) aufliegt, wobei die gedruckte Schaltung (96) eine Vorderseite gegenüber dem unteren Ende des Rufknopfes (78a), eine Rückseite und eine Öffnung (124), die durch diese gedruckte Schaltung (96) hindurchgeht, umfasst,
- die Quelle (114) auf der Rückseite dieser gedruckten Schaltung (96) gegenüber der Öffnung (124) montiert ist, um den Strahl in Richtung der Eintrittsfläche (116) der Führung (112) über die Öffnung (124) zu richten.

7. Träger nach einem der Ansprüche 4 bis 6, bei dem die Eintrittsfläche (116) in einem Abstand L zur Lichtquelle (114) angeordnet ist, wobei dieser Abstand das folgende Verhältnis überprüft: L ≤ Lmax, Lmax = (D/2)tan(α/2), wobei

- D der Durchmesser der Eintrittsfläche (116) ist, und
- α der Sendewinkel der Quelle (114) ist.

8. Träger nach einem der vorhergehenden Ansprüche, bei dem die Ausbreitungsrichtung des von der Quelle (114) entsandten Strahls senkrecht zu der Vorderseite (79) des Etiketts ist.

9. Träger nach einem der vorhergehenden Ansprüche, bei dem der Träger einen Bildschirm (76a) aufweist, umfassend eine zur Vorderseite (79) des Etiketts gewandte reflektierende Seite, wobei der Bildschirm (76a) auf der Seite des Etiketts (74a) gegenüber der Seite angeordnet ist, auf der sich der Rufknopf (78a) befindet, so dass die reflektierende Seite den von der Beleuchtungsvorrichtung (126) zur Vorderseite (79) dieses Etiketts (74a) gesandten Strahl reflektiert.

10. Träger nach einem der Ansprüche 1 bis 3, bei dem die Beleuchtungsvorrichtung eine Lichtquelle (204; 302) umfasst, die ohne jeglichen Freiheitsgrad im Inneren des Rufknopfes (78a) und gegenüber dem Fenster befestigt ist, um den Lichtstrahl direkt auf die Vorderseite (79) des Etiketts (74a) zu richten.

11. Elektrische Türsprechanlage für eine Wohnung, wobei diese Türsprechanlage Folgendes umfasst:

- einen Etikettenträger (24), wobei dieser Etikettenträger (24) mindestens einen Rufknopf (78a) umfasst, um ein Rundfunkgerät eines Bewohners anzurufen, damit dieser als Antwort den Zutritt zur Wohnung gestattet oder verbietet, und
- eine Steuereinheit (60) zum Entriegeln und/oder Verriegeln mindestens einer Eingangstür in die Wohnung in Abhängigkeit von einem vom Gerät des angerufenen Bewohners übermittelten Befehl,

**dadurch gekennzeichnet, dass** der Etikettenträger (24) einem der vorhergehenden Ansprüche entspricht.

Fig.1

Fig.2

EP 2 456 188 B1

Fig.3

Fig.4

Fig.5

Fig.6

Fig.7

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- GB 2301941 A
- FR 090958192

- FR 0958192